# EUROPEAN PATENT APPLICATION

(11) **EP 2 533 563 A1**
(43) Date of publication of application: **12.12.2012**
(21) Application number: 11305702.0
(22) Date of filing: 07.06.2011
(51) Int. Cl.: H04W 24/02

(54) **Method for adjusting the radio coverage of a Micro Base Sation with a Mobile Device, associated Micro Base Station and Mobile Device.**

(71) Applicant: Alcatel Lucent, 75007 Paris (FR)
(72) Inventor: Gaste, Yann, 91620 NOZAY (FR); Joubert, Eric, 91620 NOZAY (FR)
(74) Representative: Benezeth, Philippe J.L. M.

(57) **Abstract**

The present invention provides a method for adjusting the radio coverage of a micro base station. The method comprises: a) initiating a radio communication between said micro base station and a mobile device by inputting a first command on the mobile device located at a measurement place, b) transmitting a radio test signal from said micro base station according to a first set of transmitting parameters, c) receiving at said micro base station an acknowledgment signal from said mobile device at the same measurement place, said acknowledgement signal comprising quality parameters of said radio test signal measured by said mobile device, d) reiterating steps b) to c) with a new set of transmitting parameters for transmitting a new radio test signal, while said mobile phone is located at the same measurement place, as long as said micro base station receives an acknowledgement signal, and as long as quality parameters are greater than predetermined quality threshold values, wherein the radio coverage of the micro base station is set by using the last set of transmitting parameters for which micro base station has received an acknowledgement signal or for which corresponding quality parameters are greater than said predetermined quality threshold values. The present invention provides also the associated station and mobile device.

## Description

### FIELD OF THE INVENTION

The invention relates generally to wireless communication systems and in particular to a method for adjusting the power of a micro base station, and associated devices.

### BACKGROUND OF THE INVENTION

In a radio communication system, a radio base station (or radio access node), such as a Base Transceiver Station (BTS) for the Global System Mobility (GSM) standard, or a NodeB for Universal Mobile Telephone System (UMTS) standard, or an e-NodeB for Long Term Evolution (LTE) standard, communicates with mobile devices, such as mobile phones, PDAs or laptops equipped with a radio module. The mobile device typically communicates with a macro base station located within a range of a few kilometers; the area covered by such a base station is referred to as a macro cell.

To limit the number of macro base stations and unload part of their user traffic, the engineers have designed home base stations to be installed at subscriber or business premises. A home base station provides wireless communication services within a small radio coverage area referred to as a home cell. The home base station is connected to the service provider's network via broadband (such as DSL or cable). The home base station incorporates the functionality of a typical macro base station.

Home cells, such as microcells or femtocells, are expected to be deployed in conjunction with a macro-cellular network in an overlay configuration. For example, a macro-cellular network may be used to provide wireless connectivity to a neighborhood that includes numerous residences. Any mobile device traveling through the neighborhood or located in one of the residences may access the wireless communication system using the macro-cellular network. Individual home cells may be deployed in one or more of the residences to provide overlay coverage within (or near) the residence. Clusters of home cells may also be deployed in one or more of the buildings to provide overlay coverage within (or near) the building. In any case, there will be a one-to-many relationship between one macro cell and the associated home cells.

A micro base station of a home cell may communicate with mobile devices within a range of a few meters to several tens of meters. In this manner, a micro base station allows service providers to extend service coverage indoors, especially where access would otherwise be limited or unavailable. However, mobile devices will typically only be allowed to camp on selected micro base stations. For example, a user's equipment operated by an individual user can be allowed to camp on home base stations that are installed by the user in his residence. For another example, employees' equipments can be allowed to camp on micro base stations in a business cell cluster installed by a business unit in its facility. As the user moves throughout the geographic areas served by the macro base stations and the micro base stations, the user's equipment can be handed off between different home or micro cells.

A micro base station is usually sold to consumers for home installation with default and predetermined technical parameters defining a predetermined radio coverage for the micro base station. After installation, the operator is able to modify these coverage parameters according to network and operational constraints, such as conflicts with the macro layer and conflicts with other femtos for instance. For example, the micro base station's owner may forbid the using of his device to neighboring mobile devices. Nevertheless there is no simple means to allow the micro base station's owner to adapt the radio coverage of his device according to his personal needs and usages.

There is a need to implement a method and associated devices that allow the end-user to tune a micro base station coverage, such as a femtoCell coverage, according to his personal needs without any assistance from the telecom operator.

### SUMMARY OF THE INVENTION

According to an embodiment, a method for adjusting the radio coverage of a micro base station is provided. The method includes the steps of:
a) initiating a radio communication between said micro base station and a mobile device by inputting at least one first command on the mobile device located at a measurement place,
b) transmitting a radio test signal from said micro base station according to a first set of transmitting parameters,
c) receiving at said micro base station an acknowledgment signal from said mobile device located at the same measurement place, said acknowledgement signal comprising quality parameters of said radio test signal measured by said mobile device,
d) reiterating steps b) to c) with a new set of transmitting parameters for transmitting a new radio test signal, while said mobile phone is located at the same measurement place, as long as said micro base station receives an acknowledgement signal, and as long as quality parameters are greater than predetermined quality threshold values,
wherein the radio coverage of the micro base station is set by using the last set of transmitting parameters for which micro base station has received an acknowledgement signal or for which corresponding quality parameters are greater than said predetermined quality threshold values.

This method allows limiting the coverage to the boundaries of the place to be covered by the micro base station. In this manner, the method prevents other areas than the needed one from receiving unwanted wireless waves and allows a better cohabitation between micro base stations. If two neighbors have some micro base stations, the method helps to avoid unwanted overlap between micro base stations coverage. The quality parameters may comprise the power level and/or bandwidth and/or signal-to-noise ratio.

According to another embodiment, the first and new set of transmitting parameters comprise a transmitting power value, and reiterating steps b) to c) comprises reducing at each iteration the transmitting power value of said micro base station for transmitting said new radio test signal.. According to another embodiment, the mobile device receives from the micro base station and reproduces an indication of the last set of transmitting parameters for which micro base station receives an acknowledgement signal and corresponding quality parameters are greater than said predetermined quality threshold values. In this manner, the user can know the adjustment determined by his micro base station.

According to another embodiment, the method comprises:
- reiterating steps b) to d) for several measurement places where said mobile device is successively located, and determining said last set of transmitting parameters associated to each measurement places;
wherein the radio coverage of the micro base station is set by selecting the last set of transmitting parameters which gives the largest radio coverage. In this manner, the user may better limit the coverage to the different boundaries of the area to be covered by the micro base station.

According to another embodiment, the step of selecting the last set of transmitting parameters which gives the largest radio coverage comprises:
- comparing transmitted power values corresponding to last sets of transmitting parameters associated to said several measurement places,
- selecting the last set of transmitting parameters which includes the highest transmitted power value. In this manner, the micro base station can select the best transmitting parameters for the adjustment. According to another embodiment, a message is received from said micro base station and reproduced on the mobile device advising to move said micro base station in the direction of a measured place corresponding the highest transmitted power value. In this manner, the user can know indications to place his micro base station in an optimum place.

According to another embodiment, the mobile device is equipped with localisation means adapted to provide localisation parameters corresponding to each of said several measurement places, and the method further comprises the steps of:
- transmitting said localisation parameters to the micro base station,
- associating at the micro base station the transmitted localisation parameters with the transmitting power value comprised in the last set of transmitting parameters of each measurement place,
- determining geographical parameters of an optimal place for the micro base station, this optimal place being the barycenter of the measurement places,
- transmitting said geographical parameters to the mobile device for reproduction of an indication of said geographical parameters. In this manner, the user is guided to place his micro base station in an optimum place.

According to another embodiment, the method comprises a step of comparing at the mobile device said geographical parameters with the current place of the mobile device, and a step of displaying indications relative to the moving of the mobile device so that the mobile device is located on the place defined by said geographical parameters. In this manner, the mobile device can guide the user to move at the optimal place of the micro base station, and once the user knows this location, he will place his micro base station there.

According to another embodiment, the method comprises a step of evaluating the setting of the micro base station by using the last set of transmitting parameters, comprising a step of measurement of the quality parameters of said radio test signal measured by said mobile device at a new measurement place, and a step of indicating if micro base station has received an acknowledgement signal or if the quality parameters at this new measurement places are greater than said predetermined quality threshold values. In this manner, the user can evaluate if his micro base station mobile is well-adjusted for covering the wished area.

In another embodiment, a micro base station is provided, said micro base station comprising a radio emitter/receiver. Said micro base station also comprises a coverage adjustment module adapted to :
a) control said radio emitter/receiver for transmitting a radio test signal according to a first set of transmitting parameters upon initiation of a communication from a mobile device located in a measurement place, and for
b) receive an acknowledgment signal from said mobile device at the same measurement place, said acknowledgement signal comprising quality parameters, such as the bandwidth, of said radio test signal measured by said mobile device,
c) reiterate steps a) and b) with a new set of transmitting parameters for transmitting a new radio test signal, while said mobile phone is located at the same measurement place, as long as said micro base station receives an acknowledgement signal, and as long as quality parameters are greater than predetermined quality threshold values,
d) set the radio coverage of the micro base station by using the last set of transmitting parameters for which micro base station has received an acknowledgement signal or for which corresponding quality parameters are greater than said predetermined quality threshold values.

In another embodiment, a mobile device is provided. Said mobile device comprises a radio emitter/receiver adapted to communicate with said micro base station for implementing said method, said mobile device further comprising:
a means for inputting at least one first command when said mobile device is located at least one measurement place, the inputting of the first command triggering a communication with the micro base station ,
a means for measuring quality parameters associated to each of said radio tests signal and new radio test signal,
a means for transmitting an acknowledgment signal to said micro base station at each reception of each radio test signal, said acknowledgement signal comprising said quality parameters.

The invention may include other exemplary embodiments described below.

### BRIEF DESCRIPTION OF THE DRAWINGS

Some embodiments of device and/or methods in accordance with embodiments of the present invention are now described, by way of example only, and with reference to the accompanying drawings, in which:
Figure 1 schematically represents a block diagram of a communication system including communication equipments in which embodiments of the invention may be implemented;
Figure 2 is a flow diagram illustrating an embodiment of the present application;
Figure 3 represents a detailed flowchart for the adjustment of the transmitting parameters of the micro base station at different measurements places,
Figure 4 is a flow diagram illustrating the evaluation of the radio signal according to an embodiment of the present application;
Figure 5 illustrates an example of the place where the present application may be used;
Figure 6 depicts the main exchanges between the mobile device and a micro base station according to an embodiment of the present application.

### DETAILED DESCRIPTION OF EXAMPLE EMBODIMENTS

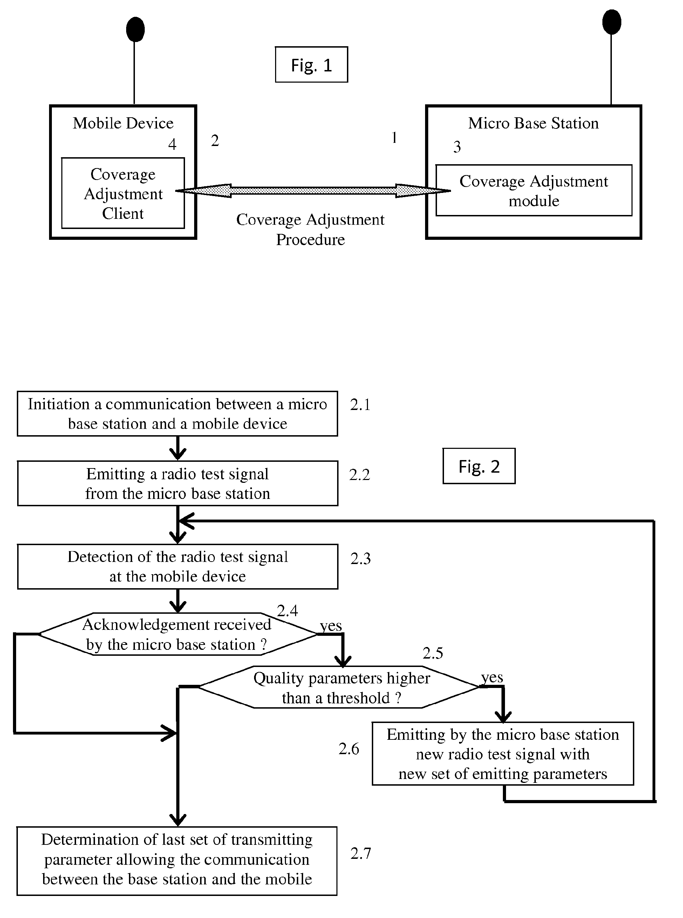

FIGS. 1-6 and the following description depict specific exemplary embodiments of the invention to teach those skilled in the art how to make and use the invention. For the purpose of teaching inventive principles, some conventional aspects of the invention have been simplified or omitted. Those skilled in the art will appreciate variations from these embodiments that fall within the scope of the invention. Those skilled in the art will appreciate that the features described below can be combined in various ways to form multiple variations of the invention. As a result, the invention is not limited to the specific embodiments described below, but only by the claims and their equivalents.

FIG. 1 illustrates a communication system in an exemplary embodiment of the invention. The communication system is implemented in a wireless network (not shown), such as a CDMA network, a TDMA network, a GSM network, a UMTS network, an IMS network, etc. Figure 1 illustrates more particularly a block diagram with a micro base station 1, for example a femtocell, communicating by radio with a mobile device 2, such as a mobile phone. Micro base station 1 comprises a Coverage Adjustment Module 3, or CAM in abbreviated form, adapted to determine transmitting parameters according to the quality of communication with mobile device 2 at one or several measurement places. Mobile device 2 comprises a Coverage Adjustment Client Module 4, or CAC in abbreviated form, adapted to launch the measurements of the quality of the communication between mobile device 2 and micro base station 1. CAM 3 and CAC 4 are possibly downloadable in the respective apparatuses, or may be implemented by specific circuits (FPGA, ASIC, ...). Both modules 3 and 4 form the application "Coverage Adjustment Procedure" or CAP in abbreviated form. When the CAP is launched, micro base station 1 and s mobile device 2 communicate together and mobile device 2 may inform the user by information displayed on a screen and/or by vocal message. Both modules communicate by radio using emitter/receiver (not shown) implemented in the respective devices.

Figure 2 represents a flowchart of the operations which might be performed during a CAP, for the measurements and the adjustment of the transmitting parameters of the micro base station. At step 2.1, a communication between micro base station 1 and mobile device 2 is initiated by an introduction of a command on mobile device 2 located at a measurement place. At step 2.2, micro base station 1 transmits a first radio test signal. At step 2.3, mobile device 2 detects the first radio test signal and determines quality parameters associated with the detected signal. The quality parameters comprise for example: power level and/or bandwidth and/or signal-to-noise ratio determined from the received signal. Then, mobile device 2 transmits an acknowledgement signal comprising the determined quality parameters. At step 2.4, the micro base station 1 checks if this acknowledgement signal is received. If the acknowledgement signal is received, at step 2.5, the micro base station 1 compares the received quality parameters with a predetermined quality threshold values. If the micro base station (1) receives an acknowledgement signal, and if quality parameters are greater than the predetermined quality threshold values, then micro base station 1 modifies its transmitting parameters, and at step 2.6 transmits a new radio test signal. Mobile device 2 receives again the new radio test signal, determines new quality parameters and sends a new acknowledgement signal toward micro base station 1. If the micro base station (1) does not receive an acknowledgement signal, or if quality parameters are not greater than the predetermined quality threshold values, then micro base station 1 uses the last transmitting parameters for which a good communication between micro base station 1 and mobile device 2 is possible (step 2.7).

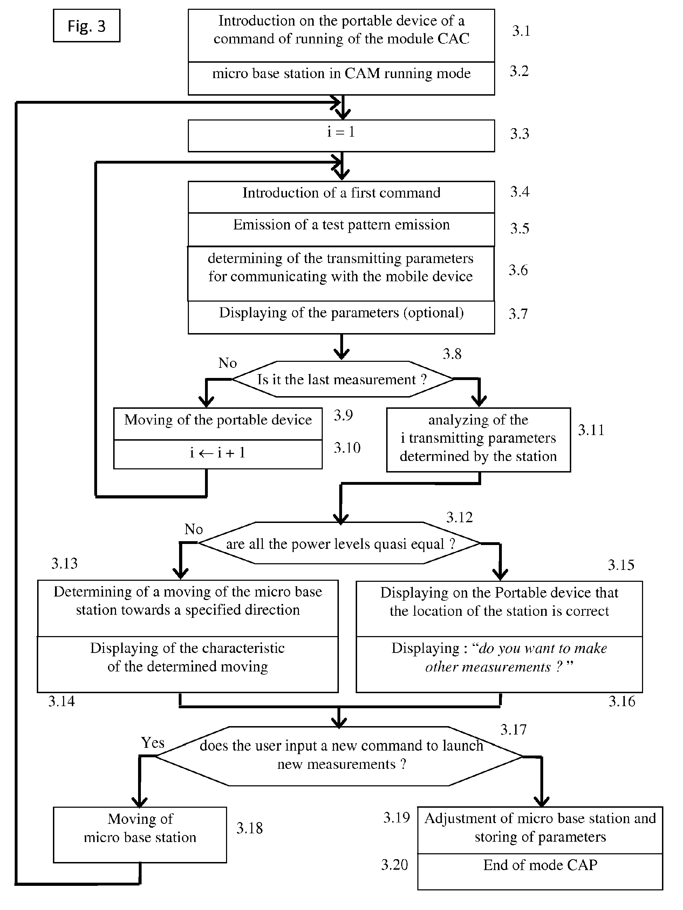

Figure 3 represents a detailed flowchart of the operations which might be performed during a CAP, for the measurements of the radio signal at different places of the user's home, according to an improvement of the present invention. At step 3.1, the user switches his mobile device 2 on, and by using a menu of navigation or of a specific key, he launches the running of CAC module 4. CAC Module 4 sends a signal to micro base station 1 which in turn launches CAM 3 (step 3.2).

Then, the user launches one or a series of measurements from his mobile device placed at one or several boundary places. The location of boundary place depends on the coverage range of the micro base station wished by the user. Beyond this boundary place, the user does not wish that his micro base station communicates with any mobile device. Each boundary place is referred by an index "i", whose value is initialized to "1" at step 3.3. The determination of a set of transmitting parameters allowing the communication between micro base station 1 and mobile device 2 is performed for each boundary place, i.e. for each measurement place. According to an embodiment, the screen of the mobile device indicates to the user the index number of measurements. At step 3.4, the user inputs a command by pressing a key on the keyboard of his mobile device, or by selecting an icon on the screen. mobile device 2 sends a signal towards micro base station 1 which, in response, transmits a radio test signal with predetermined transmitting parameters, by using for example a maximum power (step 3.5). At step 3.6, as long as said micro base station 1 receives an acknowledgement signal, and as long as quality parameters are greater than predetermined quality threshold values, micro base station 1 adjusts its transmitting parameters for allowing the communication with the mobile device at this measurement place.

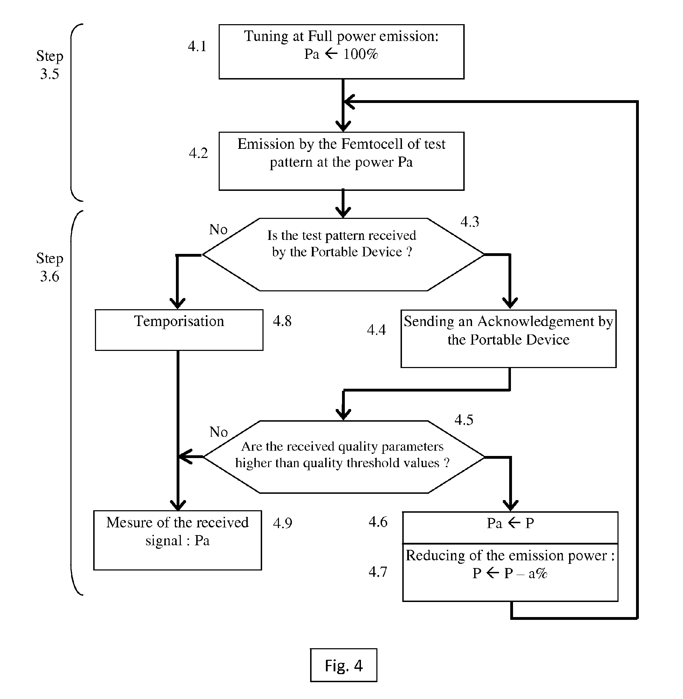

An example of evaluation of the radio signal is now explained with the flow diagram of the Figure 4. Figure 4 illustrates a particular embodiment of steps 3.5 and 3.6 for determining a new set of transmitting parameters for adjusting the micro base station at a determined location. At step 4.2, CAM 3 of micro base station 1 makes micro base station 1 to transmit a radio test signal by using predetermined first set of transmitting parameters, comprising for example a maximum power (step 4.1). With this first set of transmitting parameters, the mobile device check if the first emission of the radio test signal is detected (step 4.3). If the mobile device does not detect the radio test signal, then the micro base station 1 does not receive the acknowledgment signal during a short duration (step 4.8), and then CAM 3 considers that the communication with the mobile device is not possible. If the mobile device 2 detects the radio test signal, CAC module 4 of mobile device 2 can perform measurements of the quality parameters of the detected radio test signal, such as the power level and/or signal-to-noise ratio and/or the bandwidth of the received signal. Then the mobile device transmits an acknowledgment signal comprising said quality parameters as measured by mobile device 2 (step 4.4).

At step 4.5, the micro base station 1 compares the received quality parameters with a predetermined quality threshold values. If received quality parameters are greater than the predetermined quality threshold values, then micro base station 1 stores the transmitting parameters in a memory of micro base station 1 (step 4.6). At step 4.7, CAM 3 decreases the transmitting power level of the transmitter to reduce the radio coverage of his micro base station 1. The experiments show that the method may reduce 20% of the signal power level on each iteration. This value is an example that may be modified according to the characteristics of the devices and the environment. Then, CAM 3 loops back at step 4.2 to have micro base station 1 transmitting a new radio test signal with a new radio power level. If the new radio signal is received by the mobile device with an insufficient quality, or if micro base station 1 does not receive the acknowledgment signal, then CAM 3 considers that the communication with the mobile device is not possible. At step 4.9, the last set of transmitting parameters for which micro base station 2 receives an acknowledgement signal or for which corresponding quality parameters are greater than said predetermined quality threshold values is the one stored at step 4.6.

Referring again to figure 3, after the evaluation of the radio signal, according to an embodiment, mobile device 2 displays information relative to the measurement (step 3.7), i.e. a part or the whole of the set of transmitting parameters. In this manner, the user controls the measurement and knows the characteristics of the radio signal at this place, for example the power level value required for communicating and/or the bandwidth and/or the signal-to-noise ratio measured at this place.

Referring again to figure 3, once one measurement has been performed at the first measurement place, the user with his mobile device may move to launch another measurement at another place. It is to be noted that a single measurement may be sufficient for adjusting the radio coverage of the micro base station depending on the needs of the user, but the method also offers the possibility to make several measurements to better define the radio coverage of the micro base station. If the measurement is the last one (step 3.8), the user inputs a command of ending of measurement by pressing on another key or by selecting another icon. If it is not the last measurement, the user modifies at step 3.9 the position of his mobile device. The index "i" is incremented (step 3.10), and CAM 3 and CAC 4 loop back at step 3.4, and wait the inputting of a new command. In case of end of measurements, at step 3.11, CAM 3 of micro base station 1 analyzes the "i" measurements. If the radio power levels adjusted for communicating with the mobile device are very different (step 3.12), the micro base station is not correctly placed with regard to the measurement place. At step 3.13, CAM 3 determines how to move micro base station 1 in order to achieve a better coverage of the area defined by the measurement places (step 3.13).

The indication for moving micro base station 1 are transmitted to mobile device 2 which might reproduce, e.g.display them (step 3.14). This message advises the user to move his micro base station 1 in the direction of a measured place corresponding the highest transmitted power value. This moving may be specified by the distances relative to one or several measurement places. For example, mobile device 2 displays:

| |
|---|
| "Move the micro base station of: |
| 3 meters towards the measurement place 2 |
| and 1 meter towards the measurement place 4." |

According to a variant, mobile device 2 receives a sound message synthesized by CAM 3 of micro base station 1 and reproduces it with the loudspeaker to guide the user towards the optimum point. The CAP then proposes to the user to move his micro base station and to launch a new series of measurements (step 3.17).

According to a variant, mobile device 2 comprises a localisation means, such as a GPS (Global Positioning System) module, or a processing means by triangulation that compares the radio signal sent by neighboring fixed bases, such as macro cells. In this case, micro base station 1 does not send a moving from its current place. mobile device 2 sends its localisation for each measurement place. Micro base station 1 associates the localisation parameters with the transmitting power value determined at each measurement place. Then micro base station 1 determines geographical parameters corresponding to its optimal place, this optimal place being the barycenter of the measurement places ponderated with the transmitting powerl values. The coordinates of the barycenter give the optimum place for the micro base station with regards to the determined measurement places.

Mobile device 2 uses localisation means and display on its screen a moving of the micro base station specified by a certain distance and a certain direction. The user moves with his portable in the direction and distance indicated by the screen. With its localisation means, the mobile device continuously compares the current location and the parameters of the optimum place of the micro base station. In this manner, mobile device may interactively give indication for the moving. When the mobile device determines it is at the precise location indicated by the micro base station, then it informs the user the place is reached. Then, the user moves the micro base station to this place. It is to be noted that the indications of moving may be displayed and/or produced by voice synthesis and reproduced by a loudspeaker.

After reiterating of measurements for the new location of micro base station 1 and for all measurement place, it could be useful to check the new location. If at step 3.12, the radio power levels comprised in the transmitting parameters determined by CAM 3 for the different measurement places are quasi equal, then the micro base station 1 is located in an optimum manner with taking into account the measurement places. In this case, at step 3.15, micro base station 1 transmits a signal to mobile device 2 indicating that the position of micro base station is good. At step 3.16, mobile device 2 displays the received indication so that the user is informed. Then the program jumps at the step proposing to the user to perform a new serie of measurements (step 3.17). This choice offered to the user allows for example testing other measurement places in order to check that the current location of micro base station remains optimum.

If, at step 3.17, the user selects "no", the radio coverage of micro base station 1 is set by using the last set of transmitting parameters allowing the communication between the mobile device and the micro base station, namely the last set of parameters for which for which micro base station 1 has received an acknowledgement signal or for which corresponding quality parameters are greater than said predetermined quality threshold values, and this set of transmitting parameters is stored in a memory of the micro base station (step 3.19). In this manner, the adjustment of power of the micro base station allows communicating with the mobile device whatever its position in the area delimited by the measurements places. On each switching on, this parameter is retrieved from the memory. Lastly, at step 3.20, the CAP is finished, both CAM 3 and CAC 4 are thus ended and micro base station 1 switches in a normal mode of operation by using the stored transmitting parameters. If, at step 3.18, the user answers "yes", then CAP loops back again for another series of measurements from a new position of the micro base station or new measurements places.

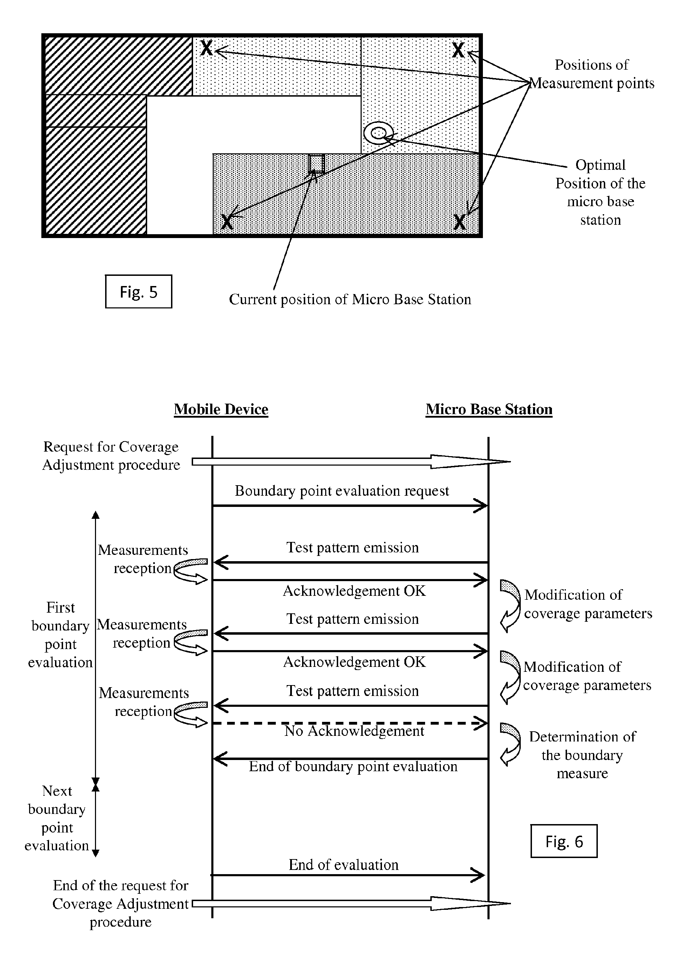

Figure 5 illustrates a home comprising several rooms inside a dwelling. The user wishes that micro base station 1 covers its home but not the whole of the dwelling and launches a series of measurements. The hatched rooms of the dwelling are not included in the user's home. At first, the user places his micro base station at a given location and takes measurement inside his home, preferably in the most distant places from his micro base station, on the level of the external walls of his home for example. In this manner, the method of power adjustment of the micro base station allows determining the minimum power level to correctly communicate with a mobile device in different places of the home. Following a first series of measurement, the CAP provides a first indication of the position of the micro base station and possibly, an indication of the position so that the power levels used to communicate with each place of user's home are quasi equal. According to the indications provided by CAC 4 of mobile device, the user modifies the position of his micro base station, and may start again a new series of measurements.

Among other advantages, by proceeding by successive iterations, the CAP allows positioning the micro base station at its optimal position represented by a round on figure 5. Figure 6 shows a time line of the main exchanges between micro base station 1 and mobile device 2.

At first, the user inputs a command for launching the CAP on the inputting means of mobile device 2 associated with micro base station 1. Mobile device 2 informs micro base station 1 of the execution of the application CAP for evaluating the measurements of power level by transmitting a request for coverage adjustment procedure. Then micro base station 1 trasnmits a radio test signal with a first set of transmitting parameters, e.g. with a maximum power level. For each received radio test signal, mobile device 2 measures the quality parameters (namely the ...) and sends an acknowledgement signal comprising the measured quality parameters. The user inputs a first command to launch a measurement at the place where the mobile device is, this measurement is shown by the first vertical arrow at the left part of the figure 6. By reiterating the sending of the radio test signal while decreasing the transmitting power level, micro base station 1 determines a set of transmitting parameters comprising power level for communicating with the portable unit at a determined measurement place. The user may input only one command to make a single measurement or he may move his mobile device and launch another measurement shown by the second vertical arrow. In this case, the user then inputs a second command to launch a second measurement.

When the user has launched the last measurement in order to delimit the radio coverage area of his micro base station, he inputs another command for ending the series of measurements. After receiving the signal corresponding to the inputting of this last command, micro base station 1 compares the transmitted power levels used for each iteration. If one (or several) places needs a transmitting power value higher than the others places, then micro base station 1 transmits to mobile device 2 information indicating to bring the micro base station closer to this places (or these places) to reduce the emitting power level and thus, to less radiate outside the user' home. According to the information provided by the CAP, the user modifies the position of his Micro Base Station, and starts again a new series of measurements.

When the radio power levels of the same series of measurements are quasi equal, micro base station 1 may transmit to mobile device 2 an indication that it is located in an optimal position to cover all (and only) the user's home.

According to a simple embodiment, mobile device 2 displays a table containing the transmitting parameters and notably, the transmitting power values , associated with each measurement place. Here is an example of displayed table:

| measurement place number | Radio transmitting Power value (mW) |
|---|---|
| 1 | 2 |
| 2 | 3,5 |
| 3 | 7 |
| 4 | 2,5 |

In the example above, the user sees the measurement places 1, 2 and 4 can easily communicate with the micro base station, but the measurement place 3 requires more power for the radio communication. Then, the user may choose to move the micro base station closer to measurement place 3 and he may launch again the measurements at the four places. When the displayed power levels are quasi equal, the user may consider that the optimal position for the Micro Base Station is reached. In this case, the user leaves his micro base station at the current place and inputs a command of ending the CAP. Then, the micro base station takes again a normal running by using the last set of transmitting parameters comprising the higher power level.

According to an improvement, after the setting of the radio coverage of the micro base station, the user may verify if the reception and bandwidth are correct in a specific point of his home, this point not being a boundary point. In this case, the user places his mobile device in this specific point and inputs a command of measurement. Micro base station 1 compares the quality parameters of the radio test signal measured by the mobile device 2 at this measurement place and transmitted in the acknowledgment signal. If the quality parameters are greater than said predetermined quality threshold values, then micro base station 1 sends to mobile device 2 a message indicating that this measurement point is correctly covered, else the micro base station sends to the mobile device a message indicating that this point is not correctly covered and that it is advised to re-adjust the radio coverage by adding the new point in the whole of measurement points. If the mobile device does not receive any message from the micro base station, the user knows this measurement point is not covered.

Where a component (e.g. an assembly, device, memory, etc.) is referred to above, unless otherwise indicated, reference to that component (including a reference to a "means") should be interpreted as a reference to any component which performs the function of the described component (i.e. is functionally equivalent to the described component), including components which are not structurally equivalent to the disclosed structure which performs the function in the illustrated exemplary embodiments of the invention.

Where a step in a method is referred to above, unless otherwise indicated, reference to that step should be interpreted as a reference to any step which achieves the same result as the step (i.e. is functionally equivalent to the described step), including steps which achieve a stated result in different ways from those disclosed in the illustrated exemplary embodiments of the invention. As will be apparent to those skilled in the art in the light of the foregoing disclosure, many alterations and modifications are possible in the practice of this invention.

## Claims

1. Method for adjusting the radio coverage of a micro base station (1), **characterized in that** it comprises the steps of :
a) initiating (2.1) a radio communication between said micro base station (1) and a mobile device (2) by inputting at least one first command on the mobile device (2) located at a measurement place,
b) transmitting (2.2) a radio test signal from said micro base station (1) according to a first set of transmitting parameters,
c) receiving (2.4) at said micro base station (1) an acknowledgment signal from said mobile device (2) located at the same measurement place, said acknowledgement signal comprising quality parameters of said radio test signal measured by said mobile device (2),
d) reiterating (2.3 to 2.6) steps b) to c) with a new set of transmitting parameters for transmitting a new radio test signal, while said mobile phone (2) is located at the same measurement place, as long as said micro base station (1) receives an acknowledgement signal, and as long as quality parameters, are greater than predetermined quality threshold values,
wherein the radio coverage of the micro base station (1) is set (2.7) by using the last set of transmitting parameters for which micro base station (1) has received an acknowledgement signal or for which corresponding quality parameters are greater than said predetermined quality threshold values.

2. Method according to claim 1, wherein said quality parameters are at least one parameter taken in the whole of parameters comprising: the power level, the bandwidth and the signal-to-noise ratio

3. Method according to claim 1 or 1, wherein said first and new sets of transmitting parameters comprise a transmitting power value, and reiterating steps b) to c) comprises reducing (4.7) at each iteration the transmitting power value of said micro base station (1) for transmitting said new radio test signal.

4. Method according to any one of claims 1 to 3, **characterized in that** the mobile device (2) receives from the micro base station (1) and displays (3.7) an indication of the last set of transmitting parameters for which micro base station (1) receives an acknowledgement signal and corresponding quality parameters are greater than said predetermined quality threshold values.

5. Method according to any one of claims 1 to 4, **characterized in that** it comprises :
- reiterating steps b) to d) for several measurement places where said mobile device (2) is successively located, and determining said last set of transmitting parameters associated to each measurement places;
wherein the radio coverage of the micro base station (1) is set by selecting the last set of transmitting parameters which gives the largest radio coverage.

6. Method according to claim 5, **characterized in that** selecting the last set of transmitting parameters which gives the largest radio coverage comprises:
- comparing (3.12) transmitted power values corresponding to last sets of transmitting parameters associated to said several measurement places,
- selecting the last set of transmitting parameters which includes the highest transmitted power value.

7. Method according to claim 6, further comprising receiving and reproducing on said mobile device (2) a message from said micro base station (1) advising to move said micro base station (1) in the direction of a measured place corresponding the highest transmitted power value.

8. Method for adjusting according to the claim 5, **characterized in that** the mobile device (2) is equipped with localisation means adapted to provide localisation parameters corresponding to each of said several measurement places, the method further comprises the steps of:
- transmitting said localisation parameters to the micro base station (1),
- associating at the micro base station (1) the transmitted localisation parameters with the transmitting power value comprised in the last set of transmitting parameters of each measurement place,
- determining geographical parameters of an optimal place for the micro base station (1), this optimal place being the barycenter of the measurement places,
- transmitting said geographical parameters to the mobile device (2) for reproduction of an indicationof said geographical parameters.

9. Method for adjusting according to the claim 8, **characterized in that** it comprises a step of comparing at the mobile device (2) said geographical parameters with the current place of the mobile device (2), and a step of displaying indications relative to the moving of the mobile device (2) in the direction of the place defined by said geographical parameters.

10. Method for adjusting according to any of the previous claims, **characterized in that** it comprises a step of evaluating the setting of the micro base station (1) by using the last set of transmitting parameters, comprising a step of measurement of the quality parameters of said radio test signal measured by said mobile device (2) at a new measurement place, and a step of indicating if micro base station (1) has received an acknowledgement signal or if the quality parameters at this new measurement places are greater than said predetermined quality threshold values.

11. Micro base station (1) comprising a radio emitter/receiver, **characterized in that** it also comprises a coverage adjustment module (3) adapted to :
a) control said radio emitter/receiver for transmitting a radio test signal according to a first set of transmitting parameters upon initiation of a communication from a mobile device (2) located in a measurement place, and for
b) receiving an acknowledgment signal from said mobile device (2) at the same measurement place, said acknowledgement signal comprising quality parameters, such as the bandwidth, of said radio test signal measured by said mobile device (2),
c) reiterate steps a) and b) with a new set of transmitting parameters for transmitting a new radio test signal, while said mobile phone (2) is located at the same measurement place, as long as said micro base station (1) receives an acknowledgement signal, and as long as quality parameters are greater than predetermined quality threshold values,
d) set the radio coverage of the micro base station (1) by using the last set of transmitting parameters for which micro base station (1) has received an acknowledgement signal or for which corresponding quality parameters are greater than said predetermined quality threshold values.

12. Micro base station (1) according to claim 11, wherein said quality parameters are at least one parameter taken in the whole of parameters comprising: the power level, the bandwidth and the signal-to-noise ratio

13. Micro base station (1) according to claim 11 or 12, wherein said first and new sets of transmitting parameters comprise a transmitting power value, and said a coverage adjustment module (3) is adapted to reduce at each iteration the transmitting power value of said micro base station (1) for transmitting said new radio test signal.

14. Micro base station (1) according to any of the claim 11 to 13, **characterized in that** the micro base station (1) receives several initiations of communication from the mobile evice (2) located at different places, the micro base station (1) analysing the plurality of last sets of transmitting parameters allowing the radio communication with each measurement place for determining a an indication of moving of said micro base station (1) in the direction of a measurement place associated with the highest power value, this indication being transmitted by the radio emitter emits towards the mobile device (2).

15. Micro base station (1) according to claim 11 or 12, **characterized in that** the radio emitter/receiver receives localisation parameters of the mobile device (2) location at each initiation of communication, the micro base station (1) using the received localisation parameters and the associated power levels in order to determine geographical parameters of the optimal place of the micro base station (1), this optimal place being the barycenter of the measurement places, the radio emitter/receiver transmitting to the mobile device (2) the parameters of the optimal place.

16. Micro base station (1) according to any of the claims 11 to 15, **characterized in that** the micro base station (1) receives several initiations of communication from the mobile device (2) located at different places and evaluates the setting of the micro base station (1) by using the last set of transmitting parameters, the micro base station (1) comprisings a means for receiving a second signal from the mobile device (2) located in a new measurement place, the receiving of the second signal triggering the comparison of the quality parameters of said radio test signal measured by said mobile device (2) at this new measurement place, and the emitting to the mobile device (2) of an indication indicating if micro base station (1) has received an acknowledgement signal or if the quality parameters at this new measurement place are greater than predetermined quality threshold values.

17. Mobile device (2) comprising a radio emitter/receiver adapted to communicate with micro base station (1) of anyone of claims 11 to 16 for implementing the method according to anyone of claims 1 to 10, **characterized in that** it also comprises:
a means for inputting at least one first command when said mobile device (2) is located at at least one measurement place, the inputting of the first command triggering a communication with the micro base station (1),
a means for measuring quality parameters associated to each of said radio tests signal and new radio test signal,
a means for transmitting an acknowledgment signal to said micro base station (1) at each reception of each radio test signal, said acknowledgement signal comprising said quality parameters .

18. Mobile device (2) according to claim 17, wherein said quality parameters are at least one parameter taken in the whole of parameters comprising: the power level, the bandwidth and the signal-to-noise ratio.

19. Mobile device (2) according to claim 17 or 18, **characterized in that** it comprises localisation means adapted to provide localisation parameters corresponding to said measurement place, the radio emitter/receiver transmitting localisation parameters of measurement places at each inputting of first command, the radio emitter/receiver receiving from said micro base station (1) the parameters of an optimal place to position said micro base station (1), this optimal place being the barycenter of the measurement places, the received parameters of the optimal place being displayed.

20. Mobile device (2) according to claim 19, **characterized in that** it comprises a means of comparison between received parameters of the optimal place with the current location of the mobile device (2), said comparison means providing indications of moving so that the mobile device (2) is located on the optimal place, the reproduction means reproducing the indications provided by the means of comparison.

21. Mobile device (2) according to any of the claims 17 to 20, **characterized in that** it comprises a means for inputing a second command when the mobile device (2) is located in a new measurement place, the inputting of the second command triggering a communication with the micro base station (1), the mobile device (2) receiving an indication indicating if micro base station (1) has received an acknowledgement signal or the quality parameters measured at the new measurement place are greater than predetermined quality threshold values.

## Amended claims

### Amended claims in accordance with Rule 137(2) EPC.

**1.** Method for adjusting the radio coverage of a micro base station (1), comprising the steps of :
a) initiating (2.1) a radio communication between said micro base station (1) and a mobile device (2) by inputting at least one first command on the mobile device (2) located at a measurement place,
b) transmitting (2.2) a radio test signal from said micro base station (1) according to a first set of transmitting parameters,
c) receiving (2.4) at said micro base station (1) an acknowledgment signal from said mobile device (2) located at the same measurement place, said acknowledgement signal comprising quality parameters of said radio test signal measured by said mobile device (2),
d) reiterating (2.3 to 2.6) steps b) to c) with a new set of transmitting parameters for transmitting a new radio test signal, while said mobile phone (2) is located at the same measurement place, as long as said micro base station (1) receives an acknowledgement signal, and as long as quality parameters, are greater than predetermined quality threshold values,
wherein the radio coverage of the micro base station (1) is set (2.7) by using the last set of transmitting parameters for which micro base station (1) has received an acknowledgement signal or for which corresponding quality parameters are greater than said predetermined quality threshold values,
**characterized by** reiterating steps b) to d) for several measurement places where said mobile device (2) is successively located, and determining said last set of transmitting parameters associated to each measurement places,
and in that the radio coverage of the micro base station (1) is set by selecting the last set of transmitting parameters which gives the largest radio coverage.

**2.** Method according to claim 1, wherein said quality parameters are at least one parameter taken in the whole of parameters comprising: the power level, the bandwidth and the signal-to-noise ratio

**3.** Method according to claim 1 or 1, wherein said first and new sets of transmitting parameters comprise a transmitting power value, and reiterating steps b) to c) comprises reducing (4.7) at each iteration the transmitting power value of said micro base station (1) for transmitting said new radio test signal.

**4.** Method according to any one of claims 1 to 3, **characterized in that** the mobile device (2) receives from the micro base station (1) and displays (3.7) an indication of the last set of transmitting parameters for which micro base station (1) receives an acknowledgement signal and corresponding quality parameters are greater than said predetermined quality threshold values.

**5.** Method according to claim 1, **characterized in that** selecting the last set of transmitting parameters which gives the largest radio coverage comprises:
- comparing (3.12) transmitted power values corresponding to last sets of transmitting parameters associated to said several measurement places,
- selecting the last set of transmitting parameters which includes the highest transmitted power value.

**6.** Method according to claim 5, further comprising receiving and reproducing on said mobile device (2) a message from said micro base station (1) advising to move said micro base station (1) in the direction of a measured place corresponding the highest transmitted power value.

**7.** Method for adjusting according to the claim 1, **characterized in that** the mobile device (2) is equipped with localisation means adapted to provide localisation parameters corresponding to each of said several measurement places, the method further comprises the steps of:
- transmitting said localisation parameters to the micro base station (1),
- associating at the micro base station (1) the transmitted localisation parameters with the transmitting power value comprised in the last set of transmitting parameters of each measurement place,
- determining geographical parameters of an optimal place for the micro base station (1), this optimal place being the barycenter of the measurement places,
- transmitting said geographical parameters to the mobile device (2) for reproduction of an indicationof said geographical parameters.

**8.** Method for adjusting according to the claim 7, **characterized in that** it comprises a step of comparing at the mobile device (2) said geographical parameters with the current place of the mobile device (2), and a step of displaying indications relative to the moving of the mobile device (2) in the direction of the place defined by said geographical parameters.

**9.** Method for adjusting according to any of the previous claims, **characterized in that** it comprises a step of evaluating the setting of the micro base station (1) by using the last set of transmitting parameters, comprising a step of measurement of the quality parameters of said radio test signal measured by said mobile device (2) at a new measurement place, and a step of indicating if micro base station (1) has received an acknowledgement signal or if the quality parameters at this new measurement places are greater than said predetermined quality threshold values.

**10.** Micro base station (1) comprising a radio emitter/receiver, **characterized in that** it also comprises a coverage adjustment module (3) adapted to :
a) control said radio emitter/receiver for transmitting a radio test signal according to a first set of transmitting parameters upon initiation of a communication from a mobile device (2) located in a measurement place, and for
b) receiving an acknowledgment signal from said mobile device (2) at the same measurement place, said acknowledgement signal comprising quality parameters, such as the bandwidth, of said radio test signal measured by said mobile device (2),
c) reiterate steps a) and b) with a new set of transmitting parameters for transmitting a new radio test signal, while said mobile phone (2) is located at the same measurement place, as long as said micro base station (1) receives an acknowledgement signal, and as long as quality parameters are greater than predetermined quality threshold values,
d) set the radio coverage of the micro base station (1) by using the last set of transmitting parameters for which micro base station (1) has received an acknowledgement signal or for which corresponding quality parameters are greater than said predetermined quality threshold values,
wherein the micro base station (1) receives several initiations of communication from the mobile device (2) located at different places, the micro base station (1) analysing the plurality of last sets of transmitting parameters allowing the radio communication with each measurement place for determining a an indication of moving of said micro base station (1) in the direction of a measurement place associated with the highest power value, this indication being transmitted by the radio emitter towards the mobile device (2).

**11.** Micro base station (1) according to claim 10, wherein said quality parameters are at least one parameter taken in the whole of parameters comprising: the power level, the bandwidth and the signal-to-noise ratio

**12.** Micro base station (1) according to claim 10 or 11, wherein said first and new sets of transmitting parameters comprise a transmitting power value, and said a coverage adjustment module (3) is adapted to reduce at each iteration the transmitting power value of said micro base station (1) for transmitting said new radio test signal.

**13.** Micro base station (1) according to claim 10 or 11, **characterized in that** the radio emitter/receiver receives localisation parameters of the mobile device (2) location at each initiation of communication, the micro base station (1) using the received localisation parameters and the associated power levels in order to determine geographical parameters of the optimal place of the micro base station (1), this optimal place being the barycenter of the measurement places, the radio emitter/receiver transmitting to the mobile device (2) the parameters of the optimal place.

**14.** Micro base station (1) according to any of the claims 10 to 13, **characterized in that** the micro base station (1) receives several initiations of communication from the mobile device (2) located at different places and evaluates the setting of the micro base station (1) by using the last set of transmitting parameters, the micro base station (1) comprisings a means for receiving a second signal from the mobile device (2) located in a new measurement place, the receiving of the second signal triggering the comparison of the quality parameters of said radio test signal measured by said mobile device (2) at this new measurement place, and the emitting to the mobile device (2) of an indication indicating if micro base station (1) has received an acknowledgement signal or if the quality parameters at this new measurement place are greater than predetermined quality threshold values.

**15.** Mobile device (2) comprising a radio emitter/receiver adapted to communicate with micro base station (1) of anyone of claims 11 to 16 for implementing the method according to anyone of claims 1 to 10, comprising:
a means for inputting at least one first command when said mobile device (2) is located at at least one measurement place, the inputting of the first command triggering a communication with the micro base station (1),
a means for measuring quality parameters associated to each of said radio tests signal and new radio test signal,
a means for transmitting an acknowledgment signal to said micro base station (1) at each reception of each radio test signal, said acknowledgement signal comprising said quality parameters
localisation means adapted to provide localisation parameters corresponding to said measurement place, the radio emitter/receiver transmitting localisation parameters of measurement places at each inputting of first command, the radio emitter/receiver receiving from said micro base station (1) the parameters of an optimal place to position said micro base station (1), this optimal place being the barycenter of the measurement places, the received parameters of the optimal place being displayed .

**16.** Mobile device (2) according to claim 15, wherein said quality parameters are at least one parameter taken in the whole of parameters comprising: the power level, the bandwidth and the signal-to-noise ratio.

**17.** Mobile device (2) according to claim 15, **characterized in that** it comprises a means of comparison between received parameters of the optimal place with the current location of the mobile device (2), said comparison means providing indications of moving so that the mobile device (2) is located on the optimal place, the reproduction means reproducing the indications provided by the means of comparison.

**18.** Mobile device (2) according to any of the claims 15 to 17, **characterized in that** it comprises a means for inputing a second command when the mobile device (2) is located in a new measurement place, the inputting of the second command triggering a communication with the micro base station (1), the mobile device (2) receiving an indication indicating if micro base station (1) has received an acknowledgement signal or the quality parameters measured at the new measurement place are greater than predetermined quality threshold values.
